# EUROPEAN PATENT APPLICATION

(11) **EP 4 574 266 A1**
(43) Date of publication of application: **25.06.2025**
(21) Application number: 23217423.5
(22) Date of filing: 18.12.2023
(51) Int. Cl.: B04B 1/08, B04B 7/00, B04B 11/02, B04B 13/00, F16J 15/16, F16J 15/34, B04B 9/10

(54) **A CENTRIFUGAL SEPARATOR AND A METHOD FOR CONTROLLING SUCH A CENTRIFUGAL SEPARATOR**

(71) Applicant: Alfa Laval Corporate AB, 221 00 Lund (SE)
(72) Inventor: EKSTRÖM, Anders, SE-187 67 TÄBY (SE); THORWID, Peter, SE-172 66 SUNDBYBERG (SE)
(74) Representative: Alfa Laval Attorneys

(57) **Abstract**

The disclosure relates to a centrifugal separator (1) for separating at least one liquid phase from a liquid feed mixture, the centrifugal separator (1) comprises a mechanical seal (30, 50, 80) for sealing between a rotatable part (4) and a stationary portion (2) during operation, which mechanical seal (30, 50, 80) comprises a rotatable sealing element (31) connected to the rotatable part (4), and at least one stationary sealing ring (32, 33) connected to the stationary portion (2). The rotatable sealing element (31) comprises at least one first sealing surface (31a) and the at least one stationary sealing ring (32, 33) comprises at least one second sealing surface (32a, 33a), which sealing surfaces (31a, 32a, 33a) are arranged with a contact force between them. A section (52, 54) of the stationary portion (2) is arranged to be axially movable in relation to the rotatable part (4), wherein the stationary sealing ring (32) is arranged in the axially movable section (52, 54) of the stationary portion (2).

## Description

### Technical field

The present disclosure relates to a centrifugal separator and a method for controlling such a centrifugal separator as defined in the appended claims.

### Background art

Centrifugal separators are generally used for separation of liquids and/or solids from a liquid mixture or a gas mixture. During operation, fluid mixture that is about to be separated is introduced into a rotating centrifuge bowl and due to the centrifugal forces, heavy particles or denser liquid, such as water, accumulates at the periphery of the centrifuge bowl whereas less dense liquid accumulates closer to the centre axis of rotation. This allows for collection of the separated fractions, e.g. by means of different outlets arranged at the periphery and close to the rotational axis, respectively. Stationary inlet and outlet pipes of high-speed separators are sealed in relation to the rotatable part of the separator. The seal may be a hermetic seal, such as a mechanical seal, which is used for guiding a mixture from an inlet to the centrifuge bowl and separate phases from the centrifuge bowl to outlets. Further, the mechanical seal may be used when the material to be separated in the centrifugal separator should not be exposed to or come in contact with the atmosphere. Thus, a hermetic seal reduces the risk of any substance, such as oxygen, or particles in the atmosphere from contaminating the liquid fed or a separated phase.

### Summary

There are challenges to keep mechanical seals tightly sealed due to impacting parameters in the surrounding environment, which leads to a reduced sealing functionality. During use of mechanical seals, heat generation and contamination on the sealing surfaces may have a negative impact on the sealing functionality. This may further result in that the sealing surfaces stick together when the centrifugal separator is stationary. When starting the machine the sealing surfaces may be negatively affected or destroyed, which leads to reduced sealing functionality. Cleaning the sealing surfaces, in order to prevent them to stick together, may only be possible by taking the machine apart, which is time consuming. Another problem which may arise due to the mechanical seals is that it may be difficult to fill the centrifuge bowl with fluid mixture due to trapped air inside the centrifuge bowl. The trapped air may be prevented from being released due to the tightly sealed centrifuge bowl. The result may be that the inlet pressure of the separator is increased.

There is thus a need for an improved centrifugal separator.

It is an objective of the present disclosure to mitigate, alleviate or eliminate one or more of the above-identified deficiencies and disadvantages in the prior art and solve the above-mentioned problems.

This is achieved by the centrifugal separator according to the appended claims.

According to a first aspect there is provided a centrifugal separator for separating at least one liquid phase from a liquid feed mixture, comprising a stationary portion, a drive member and a rotating part, wherein the drive member is configured to rotate the rotatable part in relation to the stationary portion around an axis of rotation, and wherein the rotatable part comprises a centrifuge bowl enclosing a separation space, which centrifuge bowl comprises an inlet for receiving the liquid feed mixture and at least one liquid outlet for discharging a separated liquid phase; the centrifugal separator further comprises a mechanical seal for sealing between the rotatable part and the stationary portion during operation, wherein the mechanical seal comprises a rotatable sealing element connected to the rotatable part, and at least one stationary sealing ring connected to the stationary portion; wherein the rotatable sealing element comprises at least one first sealing surface and the at least one stationary sealing ring comprises at least one second sealing surface, which sealing surfaces are arranged with a contact force between them and may form at least one sealing interface between the rotatable sealing element and the at least one stationary sealing rings during separating operation; wherein a section of the stationary portion is arranged to be axially movable in relation to the rotatable part; and wherein the at least one stationary sealing ring is arranged in the axially movable section of the stationary portion. The drive member may be a drive motor, such as an electric motor.

As used herein, the term "axially" denotes a direction which is parallel to the axis of rotation. Accordingly, relative terms such as "above", "upper", "top", "below", "lower", and "bottom" refer to relative positions along the axis of rotation. Correspondingly, the term "radially" denotes a direction extending radially from the axis of rotation. A "radially inner position" thus refers to a position closer to the axis of rotation compared to "a radially outer position". A radial plane is a plane having its normal parallel to the axis of rotation. An axial plane is a plane having its normal perpendicular to the axis of rotation.

The first aspect of the invention has the advantage that the mechanical seals are tightly sealed and prevent the sealing surfaces to stick together when the centrifugal separator is stationary. Cleaning the sealing surfaces, in order to prevent them to stick together, is possible when the contact between the sealing surfaces of the stationary sealing ring and the rotatable sealing element are disconnected. Further, the centrifuge bowl can be filled with fluid mixture without increasing the inlet pressure of the separator when the sealing surfaces of the stationary sealing ring and the rotatable sealing element are disconnected, since air inside the centrifuge bowl will be released.

The separation space of the centrifuge bowl is where the liquid feed mixture is separated into at least one liquid phase that is led out via at least one liquid outlet. The liquid feed mixture may be separated into a liquid heavy phase that is discharged through one outlet and into a liquid light phase that is discharged through another outlet. Possibly, also solids or a sludge phase is separated from the liquid feed mixture. The mechanical seal may be a hermetic seal, i.e. a seal that provides for an airtight seal. The sealing interface is the interface between the sealing surface of the rotatable sealing element and the sealing surface of the stationary sealing. During normal operation, the sealing interface may have an axial height of a few µm and may comprise a sealing or cooling liquid that decreases the friction between the sealing surfaces. The sealing surfaces may be substantially radially aligned with each other in order to have substantially the same radial extension. The contact force between the sealing surfaces may be directed mainly in an axial direction. The sealing surfaces are arranged with a contact force between them and form at least one sealing interface between the rotatable sealing element and the at least one stationary sealing ring during separating operation. The sealing interface between the sealing surfaces results in a fluid tight sealing configuration of the mechanical seal. However, during the separating operation, the axially movable section of the stationary portion may be displaced. The axially movable section of the stationary portion may be axially displaced during the separating operation to allow a gap between the sealing surfaces. Fluid may flow through the gap. The rotatable sealing element may have the shape of a plate, such as a circular plate or the shape of a ring. The stationary portion is stationary in relation to the rotatable part. The axially movable section is movable in the axially direction.

The section of the stationary portion is arranged to be axially movable in relation to the rotatable part. By moving the section axially the distance between the section of the stationary part and the rotatable part increases. The movement may be arranged in a number of steps. The movement may be stepless. The axially movement of the section may be at least 0,1 mm, such as at least 0,5 mm, such as a distance in the ratio 0,1 mm - 5 mm, preferably 1 mm - 2 mm, and most preferably 1,5 mm.

The at least one stationary sealing ring is arranged in the axially movable section of the stationary portion. The axially movement of the stationary sealing ring from the rotatable sealing element may be at least 0,1 mm, such as at least 0,5 mm, such as in the ratio 0,1 mm - 5 mm, preferably 1 mm - 2 mm, and most preferably 1,5 mm. Thereby the contact between the sealing surfaces of the stationary sealing ring and the rotatable sealing element may be disconnected when the section of the stationary portion is moved in an axially direction from the rotatable part. Moving the section in the direction towards the rotatable part may position the stationary sealing ring in contact with the rotatable sealing element.

The mechanical seal may comprise the rotatable sealing element and a first and second stationary sealing ring. The first and second stationary sealing rings may be connected to the stationary portion. The first stationary sealing ring may comprise at least one second sealing surface. The second stationary sealing ring may comprise at least one third sealing surface. The first and second stationary sealing surfaces may be arranged with a contact force to the first sealing surface of the rotatable sealing element and form at least one sealing interface between the rotatable sealing element and the at least one stationary sealing ring during separating operation The stationary sealing rings may be arranged in the axially movable section of the stationary portion. The axially movement of the first and second stationary sealing rings from the rotatable sealing element may be at least 0,1 mm, such as at least 0,5 mm, such as in the ratio 0,1 mm - 5 mm, preferably 1 mm - 2 mm, and most preferably 1,5 mm.

The section may be movable between a first position where the sealing surfaces are in contact with each other and a second position where there is a gap between the sealing surfaces. Thereby the contact between the sealing surfaces of the stationary sealing ring and the rotatable sealing element has been disconnected in the second position in which the section of the stationary portion has been moved in an axially direction from the first position. Moving the section in the direction from the rotatable part may create a gap between surfaces of the stationary sealing ring and the rotatable sealing element. The gap between the sealing surfaces may be at least 0,1 mm, such as at least 0,5 mm, such as in the ratio 0,1 mm - 5 mm, preferably 1 mm -2 mm, and most preferably 1,5 mm.

The separator may comprise an actuator arranged to axially move the section of the stationary portion. The actuator may be a pneumatically, hydraulically and/or an electrically driven actuator. A plurality of actuators may be arranged to move the section of the stationary portion. The actuator may exert force on the section in one direction or both directions of the axis of rotation. The actuator may be a spring.

The actuator may comprise an actuating space arranged for transmitting a pressure force to the axially movable section to release the contact between the sealing surfaces of the rotatable sealing element and the stationary sealing rings and allow movement from the first to the second position. The actuating space may be arranged in the stationary portion. A plurality actuating spaces may be arranged in the stationary portion. The actuating space may be integrated in the stationary portion. Such a configuration of an actuating space arranged or integrated in the stationary portion may result in a compact design of the centrifugal separator.

The separator may comprise a pressure source connected to the actuating space. The pressure source may be generated by a compressor or pump. A pressure tank may be fluidly connected to the compressor or pump. A fluid accumulator may be connected to the compressor, pump and/or the pressure tank.

The media of the pressure source may be a gas or a liquid for pressurizing the space. The actuator may be a pneumatically or hydraulically driven actuator. The pneumatically driven actuator may be integrated in the stationary portion. Air may be used as fluid for driving the actuator. A compressor may be used for compressing air. The hydraulically driven actuator may be integrated in the stationary portion. Hydraulic oil may be used as fluid for driving the actuator. A hydraulic pump may be used for creating a flow and pressure of the hydraulic oil.

The actuator may comprise a spring element, which is configured to move the section to the first position where the sealing surfaces of the rotatable sealing element and the stationary sealing rings are in contact with each other and form the at least one sealing interface. The spring element is configured to hold the section in the first position for keeping the sealing surfaces of the sealing rings in contact with each other. When moving the section from the first position to the second position the actuator overcomes the force from the spring element. The spring element may be a mechanical spring. The spring may be an air spring.

The mechanical seal may provide a seal between an inner zone and an outer zone and wherein the inner zone is located radially inside of the stationary sealing rings and extends axially through the stationary sealing rings and the outer zone is arranged radially outside the stationary sealing rings. Such configuration may prevent fluid in the inner zone to escape to the outer zone when the section is in the first position. When the section is in the second position, the fluid may flow between the inner and outer zones.

A liquid outlet may define the inner zone and a volume outside the centrifuge bowl defines the outer zone. The mechanical seal may be an outlet seal. The outlet seal may be arranged for sealing a liquid heavy phase outlet. The volume outside the centrifuge bowl may be a volume under a stationary hood that covers the centrifuge bowl. Thereby sealing between either separated liquid heavy phase or separated liquid light phase and the surroundings may be achieved. The mechanical seal may be arranged at the top of the centrifuge bowl. A pressure force applied to the seal may be larger than forces experienced by the mechanical seal from the inner zone.

Both the inner zone and the outer zone may form part of a liquid passage, and wherein the mechanical seal may be arranged such that an axial gap between the sealing surfaces is formed when the section of the stationary portion is axially moved, to allow liquid to flow from one of the zones to the other zone through said gap. The formed axial gap may allow liquid in the inner zone to be discharged through said gap to the outer zone. Thereby an efficient cleaning of the seal might be achieved. As an example, during a cleaning-in-place (CIP) process, the liquid used for cleaning may be supplied via the gap in the mechanical seal or be discharged via the gap in the mechanical seal. The formed axial gap could also be used as an alternative outlet either for the liquid heavy phase or the liquid light phase. The formed axial gap results in that the contact between the sealing surfaces of the stationary sealing ring and the rotatable sealing element has been disconnected due to the movement of the section to the second position. The gap between the sealing surfaces may be at least 0,1 mm, such as at least 0,5 mm, such as in the ratio 0,1 mm - 5 mm, preferably 1 mm - 2 mm, and most preferably 1,5 mm.

The centrifuge bowl may have a first liquid outlet for discharging a liquid heavy phase and a second liquid outlet for discharging a liquid light phase, and wherein the second liquid outlet defines the inner zone and the first liquid outlet defines the outer zone, and wherein the section of the stationary portion is arranged at the first and second liquid outlets.

The mechanical seal may be an outlet seal, such as an outlet seal arranged for sealing the liquid heavy phase outlet. The volume outside the centrifuge bowl may be a volume under a stationary hood that covers the centrifuge bowl. Thereby sealing between either separated liquid heavy phase or separated liquid light phase and the surroundings may be achieved. This may thus result in a sealing between a liquid heavy phase and a liquid light phase. The mechanical seal may be arranged at the top of the centrifuge bowl.

The centrifuge bowl may have an inlet channel for supply of said liquid feed mixture to said inlet, and wherein the inner zone is the inlet channel, and the outer zone is the liquid outlet or a volume outside the centrifuge bowl, and wherein the section of the stationary portion is arranged at the inlet. The mechanical seal may be an inlet seal and an outlet seal, such as inlet seal arranged for sealing the liquid feed mixture to the inlet, and an outlet seal arranged for sealing the liquid light phase outlet. The liquid heavy phase outlet may be arranged in the periphery of the centrifuge bowl.

The rotatable part may comprise a drive spindle having an inlet channel for supply of said liquid feed mixture to said inlet, and wherein the inner zone is the inlet channel, and the outer zone is a volume outside the drive spindle, and wherein the section of the stationary portion is arranged at the inlet.

The inner zone may also be part of an inlet, i.e. the mechanical seal may form an inlet seal. Thus, the inner zone may form part of an inlet and the outer zone may for example form part of a liquid outlet or a part outside the centrifuge bowl. The rotatable part may comprise a drive spindle having an inlet channel for supply of said liquid feed mixture to said inlet, and wherein the inner zone is the inlet channel and the outer zone is a volume outside the drive spindle. Thereby sealing between the feed mixture of the inlet and the surroundings may be achieved. The sealing may be arranged at the lower part of the centrifugal separator.

According to a second aspect there is provided a method for controlling a centrifugal separator according to the first aspect claims. The method may be performed by a control device for controlling a centrifugal separator. The method comprises the steps of: determining the rotational speed of the centrifuge bowl; and controlling an axial movement of the section of the stationary portion. The step of determining the rotational speed of the centrifuge bowl may be to detect the rotational speed by a rotational speed sensor, which is connected to the control device, wherein the control device receives the detected signals from the sensor and thereafter determines the rotational speed. The step of controlling an axial movement of the section of the stationary portion may comprise sending a signal from the control unit for activating the actuator. The actuator may then move the section to the second position, so that a gap between the sealing surfaces is created. The section may be moved to the second position when the sensor determines that the centrifuge bowl stands still and the rotational speed of the centrifugal bowl is zero.

The method may comprise the further step of: controlling a fluid flow through an axial gap between the sealing surfaces. The fluid flow through the axial gap may be controlled by the control device. A valve connected to the control device may be opened by the control device, so that that fluid, such as cleaning fluid is allowed to flow from a fluid source and further through the gap.

A first valve device can be arranged to control the flow of media from a pressure source to the actuating space. The control device can be connected to the first valve device for controlling the first valve device. A second valve device can be configured to control the flow of fluid, such as cleaning fluid from a fluid source to a position at the sealing interface. The control device can be connected to the second valve device for controlling the second valve device.

The step of controlling an axial movement of the section of the stationary portion may comprise: controlling the axial movement of the section of the stationary portion if the determined rotational speed is below a threshold value. Further, the method comprises the step of: controlling a fluid flow through an axial gap between the sealing surfaces. The step of determining the rotational speed of the centrifuge bowl may be performed at any stage in the separation process of the centrifugal separator. Determining the rotational speed of the centrifuge bowl may be performed before and/or after the operation of the centrifugal separator, wherein the rotational speed of the centrifuge bowl is zero and the centrifuge bowl stands still. The step of determining the rotational speed of the centrifuge bowl may be performed during operation of the centrifugal separator for determine that the centrifuge bowl rotates. When it is determined that the centrifuge bowl rotates, the axial movement of the section of the stationary portion may be performed to create a gap between the sealing surfaces of the mechanical seals. Creating the gap between the sealing surfaces during rotation of the centrifuge bowl may be performed for releasing air from the volume at the centrifuge bowl and/or for conditioning the sealing surfaces. The gap may be created by moving of the section of the stationary portion axially for a short period of time. The short period of time may be 1 second, preferably 0,5 seconds. Creating a gap between the sealing surfaces may also be performed for releasing air from the volume at the centrifuge bowl during filling the volume at the centrifuge bowl with mixture to be separated. In order to perform this operation, it is determined that the rotational speed of the centrifuge bowl is zero, where after an axial movement of the section of the stationary portion is performed. In order to perform the axial movement of the section of the stationary portion, a threshold value of the rotational speed of the centrifuge bowl may be set. The axial movement of the section of the stationary portion may be controlled if the determined rotational speed is below a threshold value. Further, the centrifugal separator may be set in a standby mode in which the centrifuge bowl rotates but no liquid feed mixture is supplied. Thereafter, the axial movement of the section is performed to reduce heat generation and power consumption in the mechanical seal. The step of controlling the fluid flow through an axial gap between the sealing surfaces may comprise supplying a Clean in place fluid (CIP fluid) to the centrifuge bowl and thereafter controlling the axial movement of the section of the stationary portion for creating a fluid flow of the supplied CIP fluid through the axial gap between the sealing surfaces. The CIP fluid may be water. The operation of supplying a Clean in place fluid (CIP fluid) to the centrifuge bowl and thereafter controlling the axial movement of the section of the stationary portion for creating a fluid flow of the supplied CIP fluid through the axial gap between the sealing surfaces can alternatively be performed without the preceding step of determining the rotational speed of the centrifuge bowl.

The present disclosure also relates to a computer program stored on a computer-readable medium and comprising instructions, which when the program is executed by a data processing unit of a control device of a centrifugal separator, cause the control device to carry out the method according to the second aspect. The disclosure further relates to a computer-readable medium having stored thereon the computer program. The method may be comprised in pre-programmed software, which may be implemented into a production unit suitable for utilizing the method. The pre-programmed software may be stored in the control device. Alternatively, or in combination, the software may be stored in a memory or in a computer at a distance from the control device.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

### Brief descriptions of the drawings

For fuller understanding of the present disclosure and further objects and advantages of it, the detailed description set out below should be read together with the accompanying drawings, in which the same reference notations denote similar items in the various figures, and in which:
Fig. 1 schematically illustrates a centrifugal separator in a section view according to an example;
Fig. 2 schematically illustrates a part of a centrifugal separator in a section view according to an example;
Figures 3 and 4 schematically illustrate section views in detail of a centrifugal separator according to an example;
Fig. 5 schematically illustrate section views in detail of a centrifugal separator according to an example;
Fig. 6 shows a flowchart of a method according to an example, and
Fig. 7 schematically illustrates a control device according to an example.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

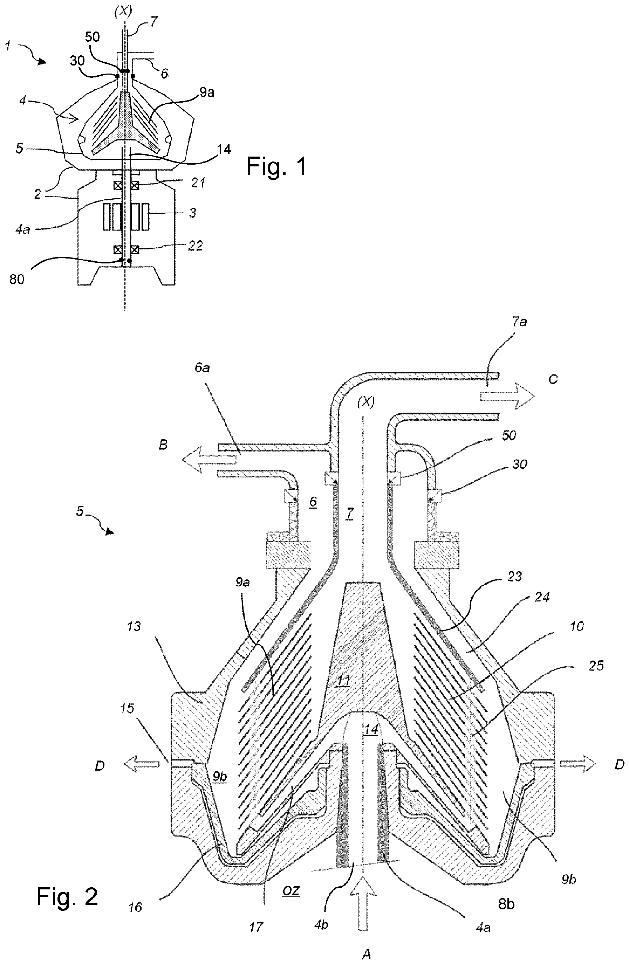

Figure 1 schematically illustrates a centrifugal separator 1 in a section view according to an example. The centrifugal separator 1 is configured for separating at least one liquid phase from a liquid feed mixture. The centrifugal separator 1 comprising a stationary portion 2, a drive member 3 and a rotating part 4, wherein the drive member 3 is configured to rotate the rotatable part 4 in relation to the stationary portion 2 around an axis of rotation X, and wherein the rotatable part 4 comprises a centrifuge bowl 5 enclosing a separation space 9a, which centrifuge bowl 5 comprises an inlet 14 for receiving the liquid feed mixture and at least one liquid outlet 6, 7 for discharging a separated liquid phase; the centrifugal separator 1 further comprises a mechanical seal 30, 50, 80 for sealing between the rotatable part 4 and the stationary portion 2 during operation

Figure 2 schematically illustrates a part of a centrifugal separator in a section view according to an example. Fig. 2. shows a more detailed view of the centrifuge bowl 5 of the centrifugal separator 1. The centrifuge bowl 5 forms within itself a separation space 9a and a sludge space 9b, located radially outside the separation space 9a. In the separation space 9a, a stack 10 of separation discs is arranged coaxially around the axis of rotation (X). The stack 10 is arranged to rotate together with the centrifuge bowl 5 and provides for an efficient separation of the liquid feed mixture into at least a liquid light phase and a liquid heavy phase. Thus, in the separation space 9a, the centrifugal separation of the liquid feed mixture takes place during operation. The sludge space 9b is in this embodiment confined between an inner surface of the centrifuge bowl 5 and an axially movable operating slide 16. The disc stack 10 is arranged under top disc 23 and is further supported at its axially lowermost portion by distributor 11. The distributor 11 comprises an annular conical base portion arranged to conduct liquid mixture from the center inlet 14 of the centrifuge bowl 5 to a predetermined radial level in the separation space 9a, and a central neck portion extending upwards from the base portion. The centrifuge bowl 5 further comprises an inlet 14 in the form of a central inlet chamber formed within or under the distributor 11. The inlet 14 is arranged for receiving the liquid feed mixture and is thus in fluid communication with the hollow interior 4b of the spindle 4a, through which the liquid feed is supplied to the centrifuge bowl 5. The inlet 14 communicates with the separation space 9a via passages 17 formed in the base portion of the distributor 11. The passages 17 may be arranged so that liquid mixture is transported to a radial level that corresponds to the radial level of the cut-outs 25 provided in the separation discs of the stack 10. The cut-outs 25 form axial channels within the disc stack and distributes the liquid feed mixture throughout the disc stack 10. The radially outer portion of the disc stack 10 communicates via a first liquid outlet 6 via channels 24 for discharge of a liquid heavy phase axially over the top disc 23. The radially inner portion of the disc stack 10 communicates with a second outlet chamber 7 for a separated light phase of the liquid feed mixture. The second outlet chamber 7 of the centrifuge bowl 5 communicates with a stationary outlet pipe 7a for discharging the separated liquid light phase from the centrifuge bowl 5. Mechanical seals 30 and 50 seal the first and second outlets 6, 7, respectively. As this is an airtight design, they are also often called hermetic seals. The inlet channel 4b is also sealed at lower end of the hollow spindle 4a, thus preventing communication between the inlet channel 4b and the surroundings. The centrifuge bowl 5 is further provided with outlets 15 at the radially outer periphery of the sludge space 9b. These outlets 15 are evenly distributed around the rotor axis (X) and are arranged for intermittent discharge of a sludge component of the liquid feed mixture. The sludge component comprises denser particles forming a sludge phase. The opening of the outlets 15 is controlled by means of an operating slide 16 actuated by operating water channels below the operating slide 16, as known in the art. In its position shown in the drawing, the operating slide 16 abuts sealingly at its periphery against the upper part of the centrifuge bowl 5, thereby closing the sludge space 9b from connection with outlets 15, which are extending through the centrifuge bowl 5. The centrifuge bowl 5 is defined by a surrounding outer wall 13.

During operation of the separator as shown in Fig. 1 and 2, the centrifuge bowl 5 is brought into rotation by the drive motor 3. Via the spindle 4a, liquid feed mixture to be separated is brought into the separation space 9a, as indicated by arrow "A". Depending on the density, different phases in the liquid feed mixture is separated between the separation discs of the stack 10. Heavier component, such as a liquid heavy phase and a sludge phase, move radially outwards between the separation discs of the stack 10 to the sludge space 9b, whereas the phase of lowest density, such as a liquid light phase, moves radially inwards between the separation discs of the stack 10 and is forced through the outlet pipe 7a via the second outlet chamber 7, as indicated by arrow "C". The liquid of higher density is instead discharged over the top disc 23 via discharge channels 24 to the first liquid outlet 6 and further out via stationary outlet pipe 6a, as indicated by arrow "B". Thus, during separation, an interphase between the liquid of lower density and the liquid of higher density is formed in the centrifuge bowl 5, such as radially within the stack of separation discs. Solids, or sludge, accumulate at the periphery of the sludge space 9b and is emptied intermittently from within the centrifuge bowl by the sludge outlets 15 being opened, whereupon sludge and a certain amount of fluid is discharged from the separation chamber by means of centrifugal force, as indicated by arrow "D". However, the discharge of sludge may also take place continuously, in which case the sludge outlets take the form of open nozzles and a certain flow of sludge and/or heavy phase is discharged continuously by means of centrifugal force. The mechanical seal 30 comprises a rotatable sealing element 31 that is connected to the rotatable part 4 and a stationary sealing ring 32 that is connected to the stationary portion 2. In the centrifugal separator 1 of Figs. 1 and 2, the liquid feed mixture to be separated is fed from the bottom. However, it should be understood that the seal 30 may also be used in a top fed separator.

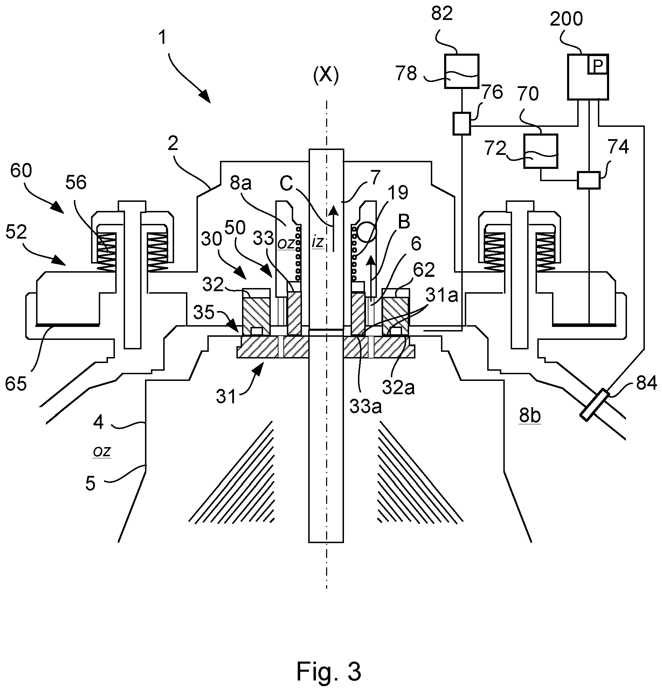

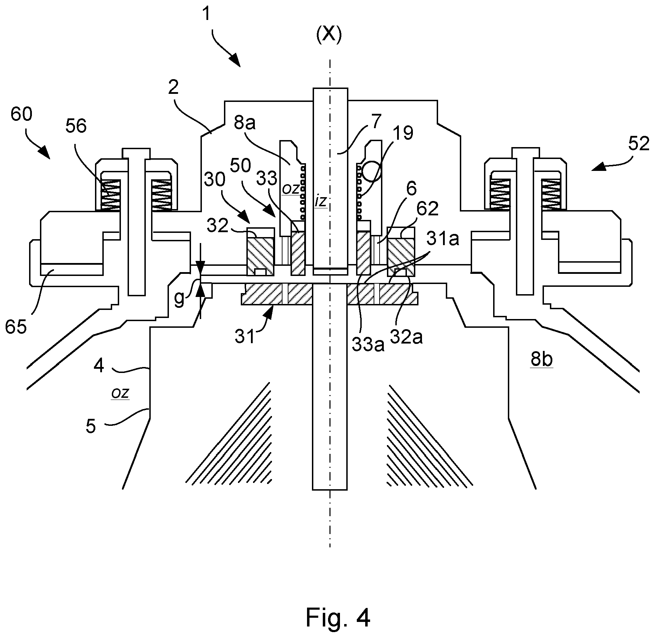

Figures 3 and 4 schematically illustrate section views in detail of a centrifugal separator according to an example. The mechanical seal 30, 50, 80 comprises a rotatable sealing ring 31 connected to the rotatable part 4, and a first and second stationary sealing ring 32, 33 connected to the stationary portion 2. The rotatable sealing element 31 comprises at least one first sealing surface 31a, the first stationary sealing ring 32 comprises at least one second sealing surface 32a and the second stationary sealing ring 33 comprises at least one third sealing surface 33a. The sealing surfaces 31a, 32a, 33a are arranged with a contact force between them and form at least one sealing interface 35 between the rotatable and the stationary sealing rings 31, 32, 33 during separating operation, which is shown in fig. 3. A section 52 of the stationary portion 2 is arranged to be axially movable in relation to the rotatable part 4. The stationary sealing rings 32, 33 are arranged in the axially movable section 52 of the stationary portion 2. section

The section 52 is movable between a first position where the sealing surface 31a, is in contact with the sealing surfaces 32a, 33a and a second position where there is a gap g between the sealing surfaces 31a, 32a, 33a. The second position of the of the section 52 is shown in fig. 4. The gap g between the sealing surface 31a and the sealing surfaces 32a, 33a is shown in fig. 4. The separator 1 comprises an actuator 60 arranged to axially move the section 52 of the stationary portion 2. The actuator 60 comprises an actuating space 65 arranged for transmitting a pressure force to the axially movable section 52 to release the contact between the sealing surfaces 31a, 32a of the rotatable sealing element 31 and the stationary sealing rings 32 and allow movement from the first to the second position. As is shown in fig. 3, a pressure source 70 is connected to the actuating space 65. The media 72 of the pressure source 70 is a gas or a liquid for pressurizing the space 65. A first valve device 74 is arranged to control the flow of media 72 from the pressure source 70 to the actuating space 65. A control device 200 is connected to the first valve device 74 for controlling the first valve device 74. The actuator 60 comprises a spring element 56, which is configured to move the section 52 to the first position where the sealing surfaces 31a, 32a, 33a of the rotatable sealing element 31 and the stationary sealing rings 32, 33 are in contact with each other and form the at least one sealing interface 35. A second valve device 76 is configured to control the flow of fluid 78, such as cleaning fluid from a fluid source 82 to a position at the sealing interface 35. The control device 200 is connected to the second valve device 76 for controlling the second valve device 76. Cleaning of the mechanical seal 30, 50 can also be performed by providing the centrifuge bowl 5 with a cleaning fluid and during rotation of the centrifuge bowl 5 moving the section 52, 54 of the stationary portion 2 axially to allow liquid to flow through the gap g between the sealing surfaces 31a, 32a, 33a. The control device 200 is also connected to a sensor device 84, which is configured to detect the rotational speed of the centrifuge bowl 5. For clarity reasons, the control device 200 and the components connected to the control device 200 are not shown in fig. 4. Further, cooling liquid may be supplied to the sealing surfaces 31a, 32a, 33a for cooling the sealing rings 31, 32, 33 during operation of the centrifugal separator 1. For clarity reasons, means for supply of cooling liquid to the sealing surfaces 31a, 32a, 33a are not shown in the figures.

The mechanical seal 30, 50 provides a seal between an inner zone iz and an outer zone oz and wherein the inner zone is located radially inside of the second stationary sealing ring 33 and extends axially through the stationary sealing rings 32, 33. The outer zone is arranged radially outside the second stationary sealing ring 33. A first liquid outlet 6 defines the inner zone iz. A volume 8a between the stationery rings 32, 33 and a volume 8b outside the centrifuge bowl 5 defines the outer zone oz. Both the inner zone iz and the outer zone oz form part of a liquid passage, and wherein the mechanical seal 30 is arranged such that an axial gap g between the sealing surface 31a and the sealing surfaces 32a, 33a is formed when the section 52, 54 of the stationary portion 2 is axially moved, to allow liquid to flow from one of the zones iz; oz to the other zone iz; oz through said gap g.

A pressurizable compartment 62 is arranged for transmitting a pressure force to the first stationary sealing ring 32. The pressurizable compartment 62 is arranged above and in close contact with the first stationary sealing ring 32. Thereby a suitable contact force between the sealing surfaces 31a, 32a may be achieved during operation. The pressurizable compartment 62 may comprise a spring (not shown) or a pressurized fluid. A spring member 19 is arranged in contact with the second stationary sealing ring 33. The spring member 19 is configured to provide a pressure on the second stationary sealing ring 33, so that a suitable contact force between the sealing surfaces 31a, 33a may be achieved during operation.

The centrifuge bowl 5 has a first liquid outlet 6 for discharging a liquid heavy phase B and a second liquid outlet 7 for discharging a liquid light phase C, and wherein the second liquid outlet 7 defines the inner zone iz and the first liquid outlet 6 defines the outer zone oz, and wherein the section 52 of the stationary portion 2 is arranged at the first and second liquid outlets 6, 7.

The rotatable part 4 comprises a drive spindle 4a (see fig. 2) having an inlet channel 4b for supply of said liquid feed mixture to said inlet 14, and wherein the inner zone iz is the inlet channel 4b, and the outer zone oz is a volume 8b outside the drive spindle 4a, and wherein the section 54 of the stationary portion 2 is arranged at the inlet 14.

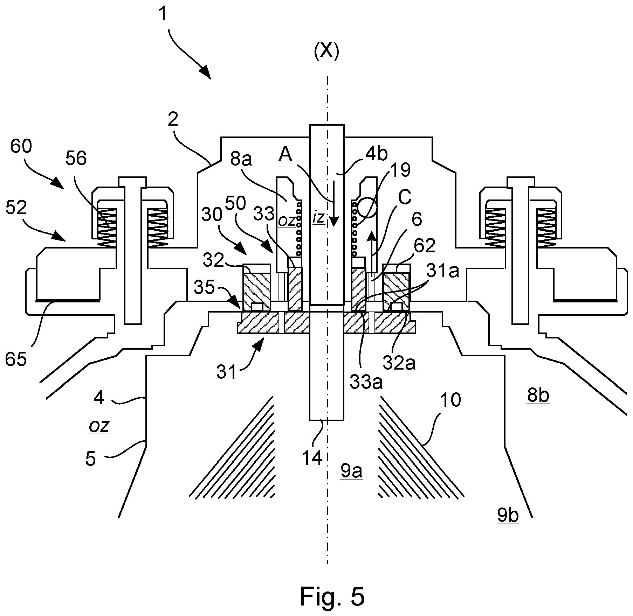

Fig. 5 schematically illustrate section views in detail of a centrifugal separator according to an example. The centrifuge bowl 5 has an inlet channel 4b for supply of said liquid feed mixture to said inlet 14, and wherein the inner zone iz is the inlet channel 4b, and the outer zone oz is the liquid outlet 6 or a volume 8b outside the centrifuge bowl 5, and wherein the section 54 of the stationary portion 2 is arranged at the inlet 14. Liquid feed mixture to be separated is brought into the separation space 9a, as indicated by arrow A. Depending on the density, different phases in the liquid feed mixture is separated between the separation discs of the stack 10. Heavier component, such as a liquid heavy phase and a sludge phase, move radially outwards between the separation discs of the stack 10 to the sludge space 9b, whereas the phase of lowest density, such as a liquid light phase, moves radially inwards between the separation discs of the stack 10 and is forced through the first liquid outlet 6, as indicated by arrow C. The sealing surface 31a is arranged with a contact force with the sealing surfaces 32a, 33a and form the at least one sealing interface 35 between the rotatable sealing element 31 and the stationary sealing rings 32, 33 during separating operation, which is shown in fig. 5. The section 52 of the stationary portion 2 is arranged to be axially movable in relation to the rotatable part 4, which is indicated in fig. 4.

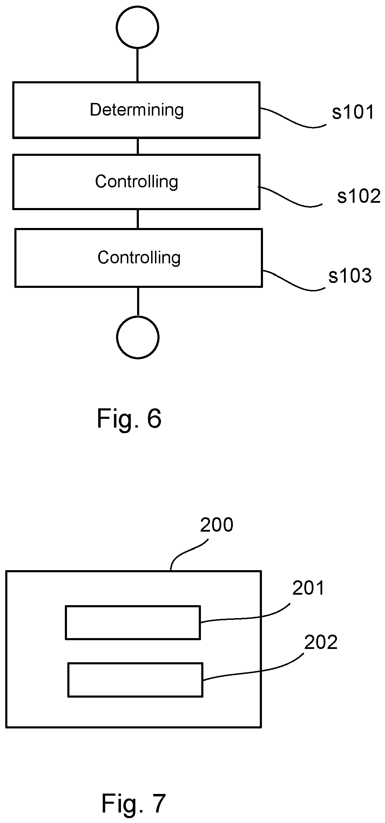

Fig. 6 shows a flowchart of a method according to an example. The method may be performed by the control device 200 for controlling a centrifugal separator 1. The method relates to the centrifugal separator 1 disclosed in figures 1-5. The method comprises the steps of: determining s101 the rotational speed of the centrifuge bowl 5; and controlling s102 an axial movement of the section 52, 54 of the stationary portion 2. The step of controlling s102 an axial movement of the section 52, 54 of the stationary portion 2 may comprise: controlling the axial movement of the section 52, 54 of the stationary portion 2 if the determined rotational speed is below a threshold value. Further, the method comprises the step of: controlling s103 a fluid flow through an axial gap g between the sealing surfaces 31a, 32a. The step of determining s101 the rotational speed of the centrifuge bowl 5 may be performed at any stage in the separation process of the centrifugal separator 1. Determining s101 the rotational speed of the centrifuge bowl 5 may be performed before and/or after the operation of the centrifugal separator 1, wherein the rotational speed of the centrifuge bowl 5 is zero and the centrifuge bowl 5 stands still. The step of determining s101 the rotational speed of the centrifuge bowl 5 may be performed during operation of the centrifugal separator 1 for determine that the centrifuge bowl 5 rotates. When it is determined that the centrifuge bowl 5 rotates, the axial movement of the section 52, 54 of the stationary portion 2 may be performed to create a gap g between the sealing surfaces 31a, 32a, 33a of the mechanical seals 30, 50, 80. Creating the gap g between the sealing surfaces 31a, 32a, 33a during rotation of the centrifuge bowl 5 may be performed for releasing air from the volume at the centrifuge bowl 5 and/or for conditioning the sealing surfaces 31a, 32a, 33a. The gap g may be created by moving of the section 52, 54 of the stationary portion 2 axially for a short period of time. The short period of time may be 1 second, preferably 0,5 seconds. Creating a gap g between the sealing surfaces 31a, 32a, 33a may also be performed for releasing air from the volume at the centrifuge bowl 5 during filling the volume at the centrifuge bowl 5 with mixture to be separated. In order to perform this operation, it is determined that the rotational speed of the centrifuge bowl 5 is zero, where after an axial movement of the section 52, 54 of the stationary portion 2 is performed. In order to perform the axial movement of the section 52, 54 of the stationary portion 2, a threshold value of the rotational speed of the centrifuge bowl 5 may be set. The axial movement of the section 52, 54 of the stationary portion 2 may be controlled if the determined rotational speed is below a threshold value. Further, the centrifugal separator 1 may be set in a standby mode in which the centrifuge bowl 5 rotates but no liquid feed mixture is supplied. Thereafter, the axial movement of the section 52, 54 is performed to reduce heat generation and power consumption in the mechanical seals 30, 50 80. The step of controlling s103 the fluid flow through an axial gap g between the sealing surfaces 31a, 32a, 33a may comprise supplying a Clean in place fluid (CIP fluid) to the centrifuge bowl 5 and thereafter controlling the axial movement of the section 52, 54 of the stationary portion 2 for creating a fluid flow of the supplied CIP fluid through the axial gap g between the sealing surfaces 31a, 32a, 33a. The CIP fluid may be water. The operation of supplying a Clean in place fluid (CIP fluid) to the centrifuge bowl 5 and thereafter controlling the axial movement of the section 52, 54 of the stationary portion 2 for creating a fluid flow of the supplied CIP fluid through the axial gap g between the sealing surfaces 31a, 32a, 33a can alternatively be performed without the preceding step of determining s101 the rotational speed of the centrifuge bowl 5.

Fig. 7 schematically illustrates a control device 200 of a centrifugal separator 1 according to an example. The control device 200 comprises at least one data processing unit 201 and a computer-readable medium 202. The control device 200 may be configured to perform the method as described in fig. 6 upon execution of a computer program P by the at least one data processing unit 201. The computer program P comprises computer-readable instructions that may be stored in the computer-readable medium 202, such as a non-transitory hardware memory device of the control device 200.

The foregoing description of the embodiments has been furnished for illustrative and descriptive purposes. It is not intended to be exhaustive, or to limit the embodiments to the variations described. Many modifications and variations will obviously be apparent to one skilled in the art. The embodiments have been chosen and described in order to best explicate principles and practical applications, and to thereby enable one skilled in the art to understand the invention in terms of its various embodiments and with the various modifications that are applicable to its intended use. The components and features specified above may, within the framework of the disclosure, be combined between different embodiments specified.

## Claims

1. A centrifugal separator (1) for separating at least one liquid phase from a liquid feed mixture, comprising
a stationary portion (2), a drive member (3) and a rotating part (4), wherein the drive member (3) is configured to rotate the rotatable part (4) in relation to the stationary portion (2) around an axis of rotation (X), and wherein the rotatable part (4) comprises a centrifuge bowl (5) enclosing a separation space (9a), which centrifuge bowl (5) comprises an inlet (14) for receiving the liquid feed mixture and at least one liquid outlet (6,7) for discharging a separated liquid phase;
the centrifugal separator (1) further comprises a mechanical seal (30, 50, 80) for sealing between the rotatable part (4) and the stationary portion (2) during operation, wherein the mechanical seal (30, 50, 80) comprises a rotatable sealing element (31) connected to the rotatable part (4), and at least one stationary sealing ring (32, 33) connected to the stationary portion (2);
wherein the rotatable sealing element (31) comprises at least one first sealing surface (31a) and the at least one stationary sealing ring (32, 33) comprises at least one second sealing surface (32a, 33a), which sealing surfaces (31a, 32a, 33a) are arranged with a contact force between them and may form at least one sealing interface (35) between the rotatable sealing element and the at least one stationary sealing ring (31, 32, 33) during separating operation;
wherein a section (52, 54) of the stationary portion (2) is arranged to be axially movable in relation to the rotatable part (4); and
wherein the at least one stationary sealing ring (32) is arranged in the axially movable section (52, 54) of the stationary portion (2).

2. The separator (1) according to claim 1, wherein the section (52, 54) is movable between a first position where the sealing surfaces (31a, 32a, 33a) are in contact with each other and a second position where there is a gap (g) between the sealing surfaces (31a, 32a, 33a).

3. The separator (1) according to any one of the claims 1 and 2, wherein the separator (1) comprises an actuator (60) arranged to axially move the section (52, 54) of the stationary portion (2).

4. The separator (1) according to claims 2 and 3, wherein the actuator (60) comprises an actuating space (65) arranged for transmitting a pressure force to the axially movable section (52, 54) to release the contact between the sealing surfaces (31a, 32a, 33a) of the rotatable sealing element (31) and the at least one stationary sealing ring (32, 33) and allow movement from the first to the second position.

5. The separator (1) according to claim 4, further comprising a pressure source (70) connected to the actuating space (65).

6. The separator (1) according to claim 5, wherein the media of the pressure source (70) is a gas or a liquid for pressurizing the space (60).

7. The separator according to any one of the claims 4 - 6, wherein the actuator (60) comprises a spring element (56), which is configured to move the section (52, 54) to the first position where the sealing surfaces (31a, 32a, 33a) of the rotatable sealing element (31) and the at least one stationary sealing ring (32, 33) are in contact with each other and form the at least one sealing interface (35).

8. The separator (1) according to any one of the preceding claims, wherein the mechanical seal (30, 50, 80) provides a seal between an inner zone (iz) and an outer zone (oz) and wherein the inner zone is located radially inside of the stationary sealing rings (32, 33) and extends axially through the stationary sealing rings (32, 33) and the outer zone is arranged radially outside the stationary sealing rings (32, 33).

9. The separator (1) according to claim 8, wherein a liquid outlet (6) defines the inner zone (iz) and a volume (8b) outside the centrifuge bowl (5) defines the outer zone (oz).

10. The separator (1) according to any one of the claims 8 and 9, wherein both the inner zone (iz) and the outer zone (oz) form part of a liquid passage, and wherein the mechanical seal (30, 50) is arranged such that an axial gap (g) between the sealing surfaces (31a, 32a, 33a) is formed when the section (52, 54) of the stationary portion (2) is axially moved, to allow liquid to flow from one of the zones (iz; oz) to the other zone (iz; oz) through said gap (g).

11. The separator (1) according to any one of the claims 8 - 10, wherein the centrifuge bowl (5) has a first liquid outlet (6) for discharging a liquid heavy phase (B) and a second liquid outlet (7) for discharging a liquid light phase (C), and wherein the second liquid outlet (7) defines the inner zone (iz) and the first liquid outlet (6) defines the outer zone (oz), and wherein the section (52) of the stationary portion (2) is arranged at the first and second liquid outlets (6, 7).

12. The separator (1) according to any one of the claims 8 - 10, wherein the centrifuge bowl (5) has an inlet channel (4b) for supply of said liquid feed mixture to said inlet (14), and wherein the inner zone (iz) is the inlet channel (4b), and the outer zone (oz) is the liquid outlet (6) or a volume (8b) outside the centrifuge bowl (5), and wherein the section (54) of the stationary portion (2) is arranged at the inlet (14).

13. The separator (1) according to any one of the claims 8 - 10, wherein the rotatable part (4) comprises a drive spindle (4a) having an inlet channel (4b) for supply of said liquid feed mixture to said inlet (14), and wherein the inner zone (iz) is the inlet channel (4b), and the outer zone (oz) is a volume (8b) outside the drive spindle (4a), and wherein the section (54) of the stationary portion (2) is arranged at the inlet (14).

14. A method for controlling a centrifugal separator (1) according to any one of the preceding claims, wherein the method comprises the steps of:
determining (s101) the rotational speed of the centrifuge bowl (5); and
controlling (s102) an axial movement of the section (52, 54) of the stationary portion (2).

15. The method according to the claim 14, wherein the step of controlling (s102) an axial movement of the section (52, 54) of the stationary portion (2) comprises, controlling the axial movement of the section (52, 54) of the stationary portion (2) if the determined rotational speed is below a threshold value.

16. The method according to any one of the claims 14 and 15, wherein the method comprises the further step of:
controlling (s103) a fluid flow through an axial gap (g) between the sealing surfaces (31a, 32a, 33a).
